# EUROPEAN PATENT APPLICATION

(11) **EP 1 985 847 A1**
(43) Date of publication of application: **29.10.2008**
(21) Application number: 07008333.2
(22) Date of filing: 24.04.2007
(51) Int. Cl.: F03D 3/00, F03D 9/02

(54) **Roof mounted wind turbine**

(71) Applicant: Teng, Tsao-Tsung, Fongyuan City, Taichung County 420 (TW); Liu, Chun-Chien, Fongyuan City T'ai chung 420 (TW); Tsay, Chwei-Jie, Fongyuan City T'ai chung 420 (TW)
(72) Inventor: Teng, Tsao-Tsung, Fongyuan city Taichung County 420 (TW)
(74) Representative: Becker, Eberhard

(57) **Abstract**

A roof wind driven generator, including a wind turbine unit (100) and a generating device (200), is disclosed. The wind turbine unit (100) is driven by the wind and a shaft (120) of the wind turbine unit rotates the rotor (210) in the generating device. Thus, the rotor (210) circles the stator (220) with a coil to generate current and supply power. The generating device being connected to an electricity-storage unit (300), e.g. a battery, to store the electricity generated by the generating device.

## Description

### BACKGROUND

### Field of Invention

The present invention relates to a generator, and more particularly to a generator driven by natural wind to store electricity in reserve.

### Description of Related Art

As the technology progress and the raising popularity, the city region has been over developed such that the building is relatively getting high and large owing to the enhanced building design and construction technology. Although these modern buildings can solve the popularity problem, there are also some potential danger factors.

Recently, people are aware of the importance of the surrounding ventilation of the residence, factory, school and office because of the occurred problems of public sanitation. Thus, the ventilation equipment is applied to the bathroom, the kitchen, the space with heater, even the roof of the factory or school to obtain not only heat-dissipation effect but also draft effect.

Generally, natural wind drives vanes of turbines of the ventilation equipments to provide airflow circulation between the inner space and the outer space. In addition, this ventilation equipment using non-electricity supply method can prevent flying insects or the birds from entering or nidifying. Although the ventilation equipment includes the aforementioned benefits, applying natural wind power to drive the turbine to simultaneously generate electricity and circulate indoor air are demanded.

### SUMMARY

It is therefore an aspect of the present invention to provide a wind driven generator to convert kinetic energy of natural wind to electricity.

It is therefore another aspect of the present invention to provide a wind driven generator that collects and stores the generated electricity.

In accordance with the foregoing description and aspects, a wind driven generator comprises a wind turbine unit and a generating device. The wind turbine unit comprises vanes and a shaft. The shaft is rotated when the vanes are gyrated with natural wind. The generating device is connected to the shaft of the wind turbine and includes a rotor and a stator wherein the rotor is connected to the shaft and the stator is disposed around the rotor: Thus, the wind turbine unit is driven by natural wind to move the rotor relative to the stator of the generating device through the shaft to generate current.

The wind driven generator further comprises an electricity-storage unit electrically connected with the generating device by means of wires to store the electricity.

In accordance with the foregoing description and aspects, another embodiment of a wind driven generator comprises a plurality of wind turbine units, a plurality of generating devices and at least one electricity-storage unit. Each wind turbine unit comprises vanes and a shaft. The shaft is rotated when the vanes are gyrated with natural wind. The generating devices are respectively connected to the shafts, and each comprises a rotor connected to the shaft and a stator disposed around the rotor. The electricity-storage unit is electrically connected with the generating devices. Thus, the wind turbine units driven by natural wind move respectively the rotors of the generating devices through the shafts to generate electricity collected and stored in the electricity-storage unit.

The wind turbine unit further includes a base on which the shaft and the vanes are mounted. The shaft is mounted in the base and the vanes are mounted around the shaft and can be rotated relative to the base in the form of turbine.

As a result, the wind driven generator in accordance with the present invention utilizes natural wind to convert kinetic energy to electricity, and stores the generated electricity in the electricity-storage unit.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Figure 1 is a partial sectional view of a wind driven generator of a first embodiment in accordance with the present invention;
Figure 2 is an enlarged partial sectional view of a portion of the wind driven generator in Figure 1;
Figure 3 is a block diagram of a wind driven generator in accordance with the present invention;
Figure 4 is a partial sectional view of a wind driven generator of a second embodiment in accordance with the present invention; and
Figure 5 is a partial sectional view of a wind driven generator of a third embodiment in accordance with the present invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

While the specification concludes with claims defining the features of the invention that are regarded as novel, it is believed that the invention will be better understood from a consideration of the following description in conjunction with the figures, in which like reference numerals are carried forward.

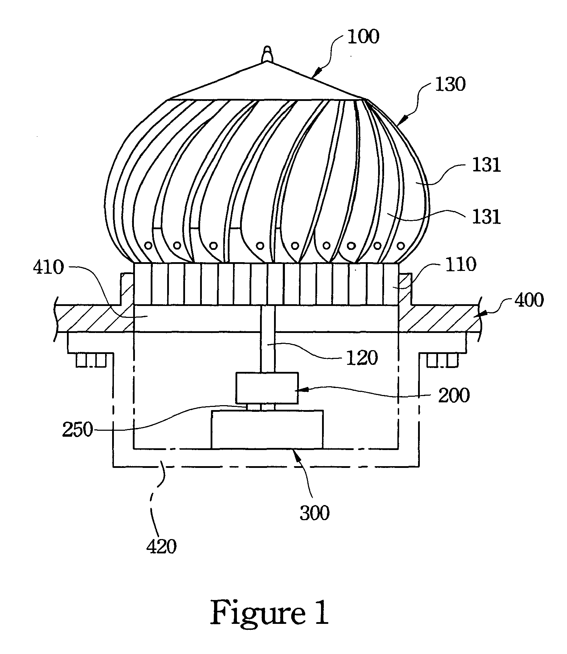

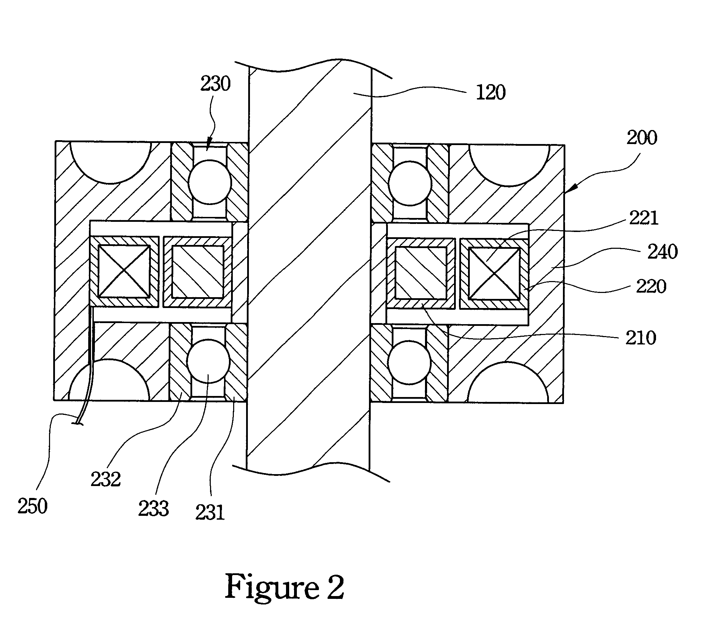

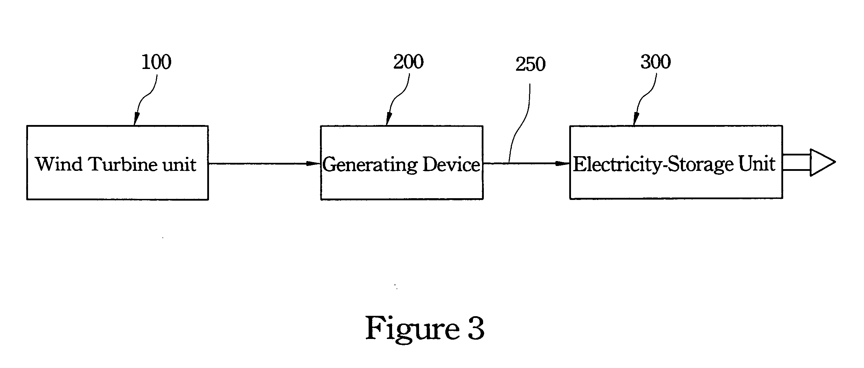

Refer to Figure 1, Figure 2 and Figure 3. Figure 1 illustrates a sectional view of a partial assembly of a wind driven generator of a first embodiment. Figure 2 illustrates an enlarged partial sectional view of the wind driven generator in Figure 1. Figure 3 illustrates a block diagram of the wind driven generator in accordance with the present invention.

The wind driven generator of the first embodiment includes a wind turbine unit 100, a generating device 200, an electricity-storage unit 300 and a mounting unit 400.

The wind turbine unit 100 is mounted and held in the mounting unit 400. The mounting unit 400 is a supporting chassis and can be disposed in an opening of the roof (factory, bathroom or kitchen) or connected with a ventilation conduit (building, heater or the range hood). The wind turbine unit 100 includes a base 110, a shaft 120 and a plurality of vanes 131. The shaft 120 is mounted in the base 110. The vanes 131 surround around the shaft 120, and are connected to the base 110 to configure a vane module 130. Natural wind gyrates the vane module 130 and rotates the shaft 120. In this embodiment, the generating device 200 includes a rotor (armature) 210, a stator 220, two bearings 230 and a shell 240. The rotor 210 is mounted on the shaft 120 and is rotated in accompanying with the shaft 120. The stator 220 is mounted on the shell 240 around the rotor 210. The bearings 230 are mounted between the shaft 120 and the shell 240 to allow the shaft 120 rotating relative to the shell240. Each bearing 230 comprises an inner circle 231, an outer circle 232 and rollers 233. The inner circle 231 is mounted on the shaft 120, and the outer circle 232 is mounted on the shell 240. The rollers 233 are mounted between the inner circle 231 and the outer circle 232.

Refer to Figure 1 and Figure 3. After natural wind gyrates the wind turbine unit 100, the vane module 130 rotates the shaft 120, and the rotor 210 of the generating device 200 is rotated by the shaft 120 relative to a coil 221 of the stator 220 to generate current.

The electricity-storage unit 300 is connected with the generating device 200 via a wire 250 to store the electricity generated by the generating device 200. In this embodiment, the electricity-storage unit 300 is a rechargeable battery and the stored electricity can be transmitted to the electrical products, such as the charging for the cell phone.

As the aforementioned description, the wind turbine unit 100 of the wind driven generator of this embodiment is developed to supply power from kinetic energy using natural wind and heat-dissipation drafts. Through this non-electricity supply method, the electricity stored in the electricity-storage unit 300 can be applied to the electrical products and the energy-saving effect is provided.

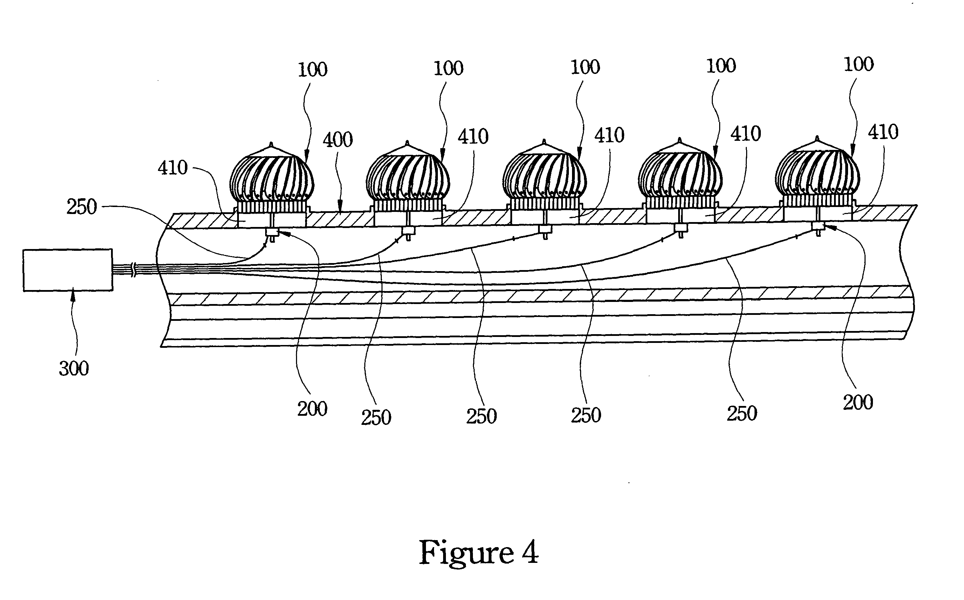

Refer to Figure 4. Figure 4 illustrates a partial sectional view of a wind driven generator of a second embodiment. The wind driven generator of the second embodiment in accordance with the present invention includes a plurality of wind turbine units 100, a plurality of generating devices 200, an electricity-storage unit 300 and a mounting unit 400.

In this embodiment, the detailed structures of the wind turbine units 100, the generating devices 200, and the electricity-storage unit 300 are the same as the members of the first embodiment in Figure 1 and Figure 2, so there is no more detailed description.

With respect to the construction, the wind turbine units 100 are respectively held in multiple openings 410 defined in the mounting unit 400. The generating devices 200 are respectively connected to the shafts 120 of the wind turbine units 100. In addition, multiple wires 250 are respectively connected between each generator 200 and the electricity-storage unit 300. The configuration of the second embodiment in Figure 4 is suitable for mounting on the roof of a factory with large area. By means of this electricity collection method in accordance with the second embodiment, the kinetic energy is converted into electricity by the generating devices 200 of the wind turbine units 100 to store in the electricity-storage unit 300 through the wires 250. Consequently, not only the electrical products with low power consumption but also the products with high power consumption, computer, fan etc, can be supplied in this way.

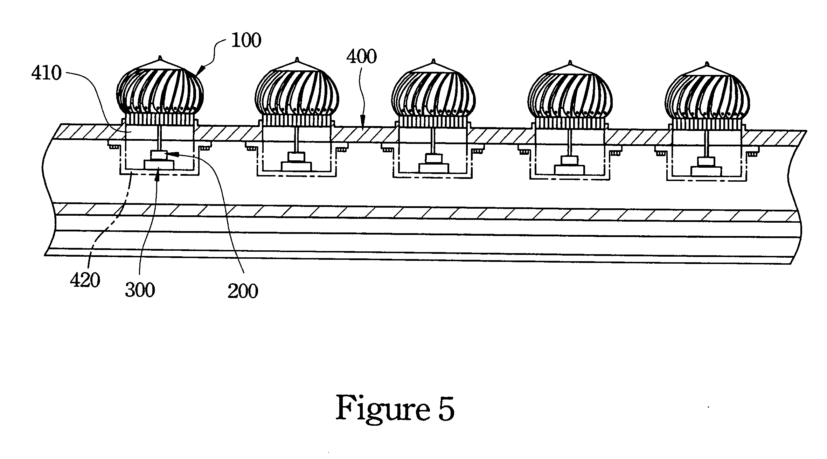

Refer to Figure 5. Figure 5 illustrates a partial sectional view of a wind driven generator of a third embodiment. The wind driven generator of the third embodiment includes a plurality of wind turbine units 100, a plurality of generating devices 200 and a plurality of electricity-storage units 300. The wind turbine units 100 are respectively disposed on the openings 410 of the mounting unit 400. The generating devices 200 are respectively connected with the wind turbine units 100. The electricity-storage units 300 are respectively connected with the generating devices 200.

The electricity generated by each generating device 200 of the wind driven generator in Figure 5 is independently stored in each electricity-storage unit 300. Furthermore, the mounting unit 400 in Figure 1 and Figure 5 includes a supporting frame 420 to hold the generating devices 200. In addition, the aspect and the effect are the same as the first embodiment so there is no more detailed description.

As embodied and broadly described herein, the collection electricity-storage method in Figure 4 or independent electricity-storage method in Figure 5 has resource recycling advantage, and the wind driven generator with different electricity-storage method can be applied flexibly in accordance with various electricity consumption. Due to the energy shortage and the high oil price problems, the dynamic supply development, the dynamic energy produced by the wind turbine unit 100 drives the generating device 200 to supply power, applied to industrial premises or the residences can save not only the power bill but also energy.

Although the present invention has been described in considerable detail with reference to certain preferred embodiments thereof, other embodiments are possible. Therefore, their spirit and scope of the appended claims should no be limited to the description of the preferred embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A wind driven generator, comprising:
a wind turbine unit (100) comprising a vane module (130) and a shaft (120), and the vane module (130) is rotated by natural wind to rotate the shaft (120);
a generating device (200) mounted on the shaft (120) of the wind turbine unit (100) and comprising a rotor (210) connected to the shaft (120) and a stator (220) disposed around the rotor (210); and
an electricity-storage unit (300) electrically connected with the generating device (200) to store the electricity generated by the generating device (200);
whereby the wind turbine unit (100) is driven by natural wind to rotate the rotor (210) of the generating device (200) through the shaft (120) relative to the stator (220) to generate electricity.

2. The wind driven generator of claim 1, wherein the generating device (200) is connected with the electricity-storage unit (300) via a wire (250) to store the electricity generated by the generating device (200) in the electricity-storage unit (300).

3. The wind driven generator of claim 1, wherein the generating device (200) further comprises at least one bearing (230) connected to the shaft (120) and a shell (240) embracing the stator (220) and the rotor (210); the bearing (230) further comprises an outer circle (233) mounted on the shell (240) tightly and an inner circle (231) mounted on the shaft (120) tightly.

4. The wind driven generator of claim 1, further comprising a mounting unit (400) on which the wind turbine unit (100) is mounted.

5. The wind driven generator of claim 1, wherein the wind turbine unit (100) comprises a base (110), and the vane module (130) comprises a plurality of vanes (131);
wherein the shaft (120) is mounted in the base (110) and the vanes (131) are mounted around the shaft (120) and connected to the base (110).

6. A wind driven generator, comprising:
a plurality of wind turbine units (100) wherein each of the wind turbine units (100) comprises a vane module (130) rotated by natural wind and a shaft (120) rotated by the vane module (130);
a plurality of generating devices (200) connected respectively to the wind turbine units (100), each of the generating devices (200) comprising a rotor (210) mounted on the shaft (120) and a stator (220) disposed around the rotor (210); and
at least one electricity-storage unit (300) electrically connected with the generating device (200);
whereby the wind turbine units (100) are driven by natural wind to rotate respectively the rotors (210) of the generating devices (200) to generate electricity stored in the at least one electricity-storage unit (300).

7. The wind driven generator of claim 6, wherein the generating device (200) is connected with each of the at least one electricity-storage unit (300) by a wire (250) to store the electricity generated by the generating device (200).

8. The wind driven generator of claim 6, wherein each generating device (200) further comprises at least one bearing (230) and a shell (240), and the at least one bearing (230) is mounted between the shaft (120) and the shell (240), and the shell (240) embraces the stator (220) and the rotor (210).

9. The wind driven generator of claim 6, wherein the at least one electricity-storage unit (300) comprises multiple electricity-storage units (300) connected respectively to the generating devices (200) by wires (250) to store the electricity.

10. The wind driven generator of claim 6, further comprising a mounting unit (400) with multiple openings (410) for disposing respectively the wind turbine units (100).

11. The wind driven generator of claim 6, wherein each wind turbine unit (100) further comprises a base (110), and the vane module (130) comprises a plurality of vanes (131);
wherein the shaft (120) is mounted in the base (110) and the vanes (131) are mounted around the shaft (120) and are connected to the base (110).
